# EUROPÄISCHE PATENTSCHRIFT

(11) **EP 0 622 383 B1**
(45) Veröffentlichungstag und Bekanntmachung des Hinweises auf die Patenterteilung: **14.08.1996**
(21) Anmeldenummer: 94106268.9
(22) Anmeldetag: 22.04.1994
(51) Int. Cl.: C08F 265/06, C14C 11/00, C09D 151/00

(54) **Pfropfpolymerisate zur Behandlung flexibler Flächengebilde**
Graft polymers for treatment of flexible sheets
Copolymères greffés pour le traitement de feuilles souples

(30) Priorität: 27.04.1993 DE 4313714
(43) Veröffentlichungstag der Anmeldung: 02.11.1994
(73) Patentinhaber: Röhm GmbH, D-64293 Darmstadt (DE)
(72) Erfinder: Bauer, Harald, Dr., D-64331 Weiterstadt (DE); Christner, Jürgen, Dr., D-64342 Seeheim-Jugenheim (DE); Weber, Maria Luise, D-63322 Rödermark (DE); Höhne, Wolfgang, c/o Röhm Brasilera, 93025-700 Sao Leopoldo (BR)

(56) Entgegenhaltungen:
- EP-A- 0 009 258
- EP-A- 0 082 020
- EP-A- 0 311 908
- EP-A- 0 387 664
- EP-A- 0 492 405

## Beschreibung

### Gebiet der Erfindung

Die Erfindung betrifft Pfropfpolymerisate auf Acrylatbasis zur Behandlung flexibler Flächengebilde insbesondere zur Beschichtung von Leder.

### Stand der Technik

Das aus der Gerbung kommende Leder bedarf in der Regel einer auf die schließliche Verwendung ausgerichtete Zurichtung. Dazu gehört vielfach die Behandlung der Leder mit chemischen Zurichthilfsmitteln, die das Aussehen und die mechanischen Eigenschaften des Leders stark beeinflussen können. Zurichtoperationen unter Verwendung chemischer Hilfsmittel sind u.a. beispielsweise die Imprägnierung, die Grundierung und die Schlußlackierung von Ledern (vgl. F. Stather, Gerbereichemie und Gerbereichtechnologie, Akadamei-Verlag, Berlin 1967, S. 566 - 632; R. Schubert, Lederzurichtung-Oberflächenbehandlung des Leders, in H. Herfeld, Ed. Bibliothek des Leders Bd. 6, Umschauverlag 1982). Traditionell finden bei der Zurichtung Polymerprodukte aus der Gruppe Polyurethane, Styrol-Butadien-Polymeren, PVC-Polyvinylacetat-Polymeren, der Nitrocellulose und - mit steigender Tendenz - der Polyacrylate, gewöhnlich in Form von Dispersionen Verwendung. Allerdings ist die Anwendung von Polyacrylaten in verschiedener Hinsicht eingeschränkt, da die den Polyacrylaten innewohnenden Eigenschaften den Anspruchsprofilen nicht entsprechen. So besteht z.B. eine zu hohe Thermoplastizität, die sich in schlechter Prägbarkeit der Leder bemerkbar macht. Desweiteren besitzen Acrylatdispersionen häufig keine ausreichende Kälteflexibilität im Vergleich etwa zu Polyurethan-Dispersionen. Für viele Anwendungen wie z.B. bei Grundierungen macht sich die häufig zu hohe Klebrigkeit der Acrylatfilme störend bemerkbar. Schließlich sind auch die mechanischen Eigenschaften der Acrylat-Dispersionen wie Reißdehnung und Zugfestigkeit für hohe Ansprüche nicht voll befriedigend. Dies schlägt sich in ungenügender Knickfestigkeit der Leder (im Bally-Flexometertest) nieder. Ähnliche Defizite bestehen auch bei der Wasserund Lösemittelbeständigkeit, die bei Polyurethan-Dispersionen stärker ausgeprägt ist.

### Aufgabe und Lösung

Die oben dargestellten Defizite machen den Wunsch der Technik nach verbesserten Polymerprodukten mit einer Kälteflexibilität bis herab zu -40 Grad C, die wenig oder gar nicht klebrig sind und gleichzeitig gute Prägbarkeit besitzen, verständlich.

In der (unveröffentlichten) deutschen Patentanmeldung P 42 11 060.2 (EP-A-0 563 819) werden Polymerprodukte zur Behandlung von Leder auf (Meth)acrylatbasis beschrieben, die Pfropfprodukte von (Meth)acrylsäureestern von C2-C24-Alkanolen auf ein Basispolymerisat darstellen, das zu 55 - 100 Gew.-% aus Acrylsäureestern von C2-C24-Alkanolen aufgebaut ist, mit der Maßgabe daß die Alkylreste in beiden Monomergruppen Van-der-Waals-Volumina aufweisen, die sich um weniger als 30 % unterscheiden.

Zwar stellen die Propfprodukte gemäß der deutschen Patentanmeldung in mehrfacher Hinsicht einen Fortschritt dar, aber auch sie können im Hinblick auf die Kälteflexibilität nicht völlig befriedigen.

Es bestand daher nach wie vor die Aufgabe, Acrylatdispersionen zur Verfügung zu stellen, welche allgemein gute mechanische Eigenschaften mit ausreichender Flexibilität in der Kälte verbinden.

Es wurde nun gefunden, daß die Nachteile der bisher vorgeschlagenen Acrylat-Dispersionen bei der Anwendung auf dem Ledergebiet durch die erfindungsgemäßen Pfropfpolymerisate beseitigt werden können.

Die Erfindung betrifft somit Emulsionspolymerisate EMP auf Acrylatbasis hergestellt durch Pfropfung eines oder mehrerer Pfropfmonomeren der Formel I 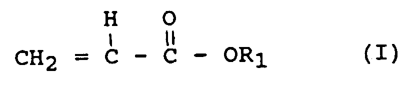 worin R₁ für einen Kohlenwasserstoffrest, vorzugsweise einen Alkylrest mit 2 - 24 Kohlenstoffatomen, insbesondere 2 - 8 Kohlenstoffatomen, steht, auf ein Basispolymerisat BP das zu 55 - 100 Gew.-%, insbesondere zu 85 - 100 Gew.-% aufgebaut ist aus Monomeren der Formel II 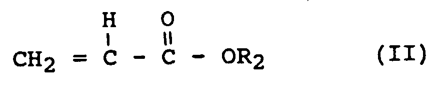 worin R₂ für einen Kohlenwasserstoffrest mit 2 - 24, insbesondere einen Alkylrest mit 2 - 24 Kohlenstoffatomen, vorzugsweise 2 - 8 Kohlenstoffatomen steht, mit der Maßgabe, daß das Verhältnis Pfropfmonomeren der Formel I zu Monomeren des Basispolymerisats BP 1 zu 9 bis 1 zu 1 Gew.-Teile beträgt.

Vorzugsweise sind die Monomeren der Formel I ausgewählt aus der Gruppe, worin R₁ für Ethyl, n-Butyl, Isobutyl und 2-Ethylhexyl steht.

Ebenfalls vorzugsweise sind die Monomeren der Formel II ausgewählt aus der Gruppe, worin R₂ für Ethyl, Butyl, Isobutyl und 2-Ethylhexyl steht.

Neben den Monomeren der Formeln (I) und (II) können im Basispolymerisat BP noch weitere mit diesen copolymerisierbaren Comonomeren der Formel III in Anteilen von 0 bis 10, vorzugsweise 0,5 bis 5 Gew.-% enthalten sein 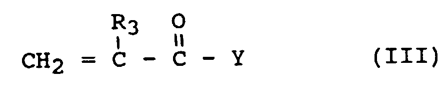 worin
- R₃: Wasserstoff oder Methyl und
- y: einen Rest -OH oder -OR₄ worin R₄ für 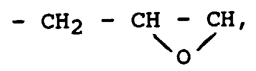 oder einen mit mindestens einer Hydroxyl- oder einer Gruppe - NR₅R₆ substituierten Alkylrest mit 2 bis 6 Kohlenstoffatomen, steht und R₅ und R₆ für Wasserstoff, Alkyl mit 1 bis 6 Kohlenstoffatomen steht oder worin R₅ und R₆ unter Einbeziehung des Stickstoffs und gegebenenfalls eines weiteren Heteroatoms aus der Gruppe Stickstoff, Sauerstoff, Schwefel einen 5- oder 6-gliedrigen Heterocyclus bilden oder eine Gruppe -NR₇'R₈ worin R₇ für Wasserstoff oder einen Alkylrest mit 1 bis 8 Kohlenstoffatomen steht und R₈ für Wasserstoff oder einen gegebenenfalls mit einer -OR₉-Gruppe, wobei R₉ für Wasserstoff oder einen Alkylrest mit 1 bis 4 Kohlenstoffatomen oder einer Gruppe NR₅'R₆' worin R₅' und R₆' die gleichen Bedeutungen wie R₅ und R₆ besitzen, substituierten Alkylrest mit 1 bis 8 Kohlenstoffatomen
bedeutet.

Weiter können andere copolymerisierbare Monomere, z.B. Vinylester wie Vinylacetat, Vinylpropionat copolymerisert werden (vgl. Ullmann's Encyclopädie der Techn. Chemie, 3. Auflage, Bd. 14, S. 108 - 109, Urban & Schwarzenberg 1967). Bewährt hat sich beispielsweise der Aufbau der Basispolymerisate BP aus den Monomeren Ethylacrylat/Butylacrylat meist im Bereich von ca. 65 ± 5 Gew.-% (bezogen auf EMP) zusammen mit Methacrylsäure und gegebenenfalls Methacrylamid und N-Methylolmethacrylamid. Der Anteil an funktionellen Comonomeren der Formel III, wie z.B. N-Methylolmethacrylamid, (Meth)acrylamid, (Meth)acrylsäure, Glycidyl(meth)acrylat (vgl. H. Rauch-Puntigam, Th. Völker, Acryl- und Methacrylverbindungen, Springer-Verlag 1968) sollte kleiner als 5 Gew.-% bezogen auf die Gesamtheit der Monomeren sein.

Am Aufbau sowohl des Pfropf- als auch des Basispolymerisats können mehrfunktionelle (Meth)acrylsäureester wie z.B. die Ester der mehrwertigen Alkohole Butandiol, Glykol, Triethylenglykol, Hexandiol, sowie mehrfach ungesättigte Ester wie Allyl(meth)acrylat in Mengen von 0 - 5 Gew.-% vorzugsweise 0,1 bis 1 Gew.-% eingesetzt werden.

### Herstellung der Polymerisate EMP

Wichtig im Zusammenhang mit der vorliegenden Erfindung ist die Herstellung der Pfropfpolymeren nach dem Emulsionspolymerisationsverfahren (vgl. Rauch-Puntigam, Th. Völker, Acryl- und Methacrylverbindungen loc.cit. pg. 217 - 230). Die erfindungsgemäßen Polymerisate EMP werden in einem zweistufigen Emulsionspolymerisationsverfahren hergestellt, wobei die erste Stufe, die Herstellung der Basispolymerisate BP, vorteilhaft als Batchpolymerisation durchgeführt wird. Zweckmäßig schließt sich unmittelbar daran die Pfropfung, vorzugsweise in Form einer Zulaufpolymerisation der Pfropfmonomeren PM an.

Dabei kann im einzelnen wie folgt verfahren werden: Zunächst stellt man unter Zugabe an sich bekannter Emulgatoren wie z.B. von anionogenen vom Typ der Paraffinsulfonate und unter Zusatz der für die Emulsionspolymerisation geeigneten Initiatoren, insbesondere von Redox-Initiatoren, die eine peroxidische und eine reduzierende Komponente, beispielsweise eine Schwefelverbindung enthalten (gewöhnlich in Mengen von 0,01 bis 0,2 Gew.-% bezogen auf die Monomeren) in einem geeigneten, mit Heizung, Rührer, Thermometer, Gaseinleitungsmöglichkeiten usw. versehenen Reaktor eine wäßrige Emulsion der Monomeren her, vorzugsweise mit einem Monomergehalt im Bereich 10 bis 40 Gew.-%. Zweckmäßig geht man so vor, daß zunächst nur peroxidische Partner des Redox-Initiatorsystems zugesetzt wird. Genannt seien z.B. Peroxydisulfat als peroxidische und Na₂S₂O₅ als reduzierende Komponenten. Anschließend erwärmt man, zweckmäßig unter einem inerten Schutzgas wie beispielsweise Stickstoff/ Argon auf eine geeignete Polymerisationstemperatur, etwa 35 ± 10 Grad C und unter Zugabe des bzw. der reduzierenden Partner der Redox-Systeme. Die Temperatur steigt gewöhnlich innerhalb kurzer Zeit z.B. während ca. 10 Minuten erheblich an, beispielsweise auf ca. 95 Grad C.

Daraufhin gibt man die Pfropfmonomeren PM, vorzugsweise durch Eintropfen, zu, in der Regel innerhalb von 10 bis 90 Minuten. Anschließend führt man unter Erwärmen, als Anhalt seien 80 Grad C genannt, die Endpolymerisation durch. Die erfindungsgemäß erhaltenen Dispersionen haben üblicherweise einen Feststoffgehalt von 20 bis 70 Gew.-%, vorzugsweise 30 bis 50 Gew.-% bezogen auf die gesamte Dispersion.

Durch Variation der Monomeren im Basispolymer und Pfropfpolymer sowie des Verhältnisses von Basis- zu Pfropfpolymer läßt sich die Glasübergangstemperatur Tg und damit auch die Kälteflexibilität (Cold Crack) des Gesamtsystems einstellen. Zu den Glasübergangstemperaturen Tg und dem Einfluß der Monomeren auf dieselbe vgl. Kirk-Othmer, Encyclopedia of Chemical Technology 3rd. Ed. Vol. 1, pg. 287 - 289; J. Wiley 1978; Vieweg-Esser, Kunststoff-Handbuch, Bd. IX, S. 333 - 340, Carl Hanser Verlag 1975; H.F. Mark et al. Encyclopedia of Polymer Science & Engineering 2nd Ed. Vol. 7, pg. 533 - 544, J. Wiley 1987).

### Vorteilhafte Wirkungen

Die erfindungsgemäßen Emulsionspolymerisate eignen sich sehr gut zur Behandlung, insbesondere zur Beschichtung von flexiblen Flächengebilden wie Leder, Textilien, Papieren u.ä.

### BEISPIELE

### Beispiel 1

Pfropfpolymer auf Basispolymer BP aus Ethylacrylat/Methacrylsäure/Methacrylamid/N-Methylolmethacrylamid gepfropft mit Ethylacrylat im Gewichtsverhältnis (65,5 : 2 : 1,5 : 1) : 30.

Eine Emulsion aus 229,25 g Ethylacrylat, 7 g Methacrylsäure, 5,25 g Methacrylamid, 5,83 g N-Methylolmethacrylamid, 2,63 g Natriumsalz des C15-Paraffinsulfonats als Emulgator, 0,53 g Ammoniumperoxidisulfat, 1,4 mg FeSO₄ und 530 g Wasser werden auf 30 Grad C erwärmt und unter Inertgas (Stickstoff oder Argon) mit 0,26 g Na₂S₂O₅ versetzt. Die Temperatur steigt innerhalb von 8 - 10 min auf 95 Grad C. Sofort anschließend werden 105 g Ethylacrylat innerhalb von 15 min zugetropft. Zur Endpolymerisation wird 60 min bei 90 Grad C gerührt, dann wird abgekühlt. Man erhält eine stabile Dispersion, die unmittelbar oder nach Zugabe von NH₃ zu einem elastischen Film aufgetrocknet werden kann.

### Beispiel 2

Pfropfpolymer auf Basispolymer BP aus Ethylacrylat, Methacrylsäure gepfropft mit Ethylacrylat im Gewichtsverhältnis (68 : 2) : 30

Analog Beispiel 1 wird eine Emulsion aus 238 g Ethylacrylat, 7 g Methacrysäure, 2,63 g Natriumsalz des Paraffinsulfonats mit 0,53 g Ammoniumperoxidisulfat und 1,4 mg FeSO₄ sowie 0,26 g Na₂S₂O₅ in 525 g Wasser polymerisiert. Darauf werden 105 g Ethylacrylat gepfropft.

### Beispiel 3:

Pfropfpolymer auf Basispolymer BP aus Ethylacrylat/Butylacrylat/Methacrylsäure/Methacrylamid/N-Methylolmethacrylamid gepfropft mit Ethylacrylat im Gewichtsverhältnis (55,5 : 10 : 2 : 1 : 1,5) : 30.

Analog Beispiel 1 wird eine Emulsion aus 194,25 g Ethylacrylat, 35 g Butylacrylat, 7 g Methacrylsäure, 5,25 g Methacrylamid, 5,83 g N-Methylolmethacrylamid, 2,63 g Natriumsalz des Paraffinsulfonates, 0,53 g Ammoniumperoxidisulfat und 1,4 mg FeSO₄ sowie 0,26 g Na₂S₂O₅ in 525 g Wasser polymerisiert. Darauf werden 105 g Ethylacrylat gepfropft.

In der folgenden Tabelle 1 sind Formulierungen zur anwendungstechnischen Prüfung des Pfropfpolymerisats aus Herstellungsbeispiel 1 angegeben.

Die folgenden Beispiele A-1 bis A-3 erläutern die Anwendung des Pfropfpolymerisats gemäß Beispiel 1 in den Formulierungen gemäß Tabelle 1

### A-1: Grundierung für vollnarbige Nappaleder

### Applikation:

Die Formulierung A-1 wird ein bis zweimal satt (20 - 40 g/m²) gespritzt mit einer handelsüblichen Luftdruck-Spritzpistole (ca. 4 bar Druck, Düsenweite 1,2 bzw. 1,4 mm). Anschließend wird entweder bei 60 - 80 Grad C in einem Trockenkanal mit Umluft 1 - 5 min oder bei Raumtemperatur getrocknet. Dann wird gebügelt bei 80 - 90 Grad C und einem Druck von 50 - 100 bar. Anschließend wird noch 2 mal mit der jeweiligen Formulierung mittelstark gespritzt (ca. 10 - 20 g/m²) und wie oben getrocknet.

Die Gesamtauftragsmenge beträgt 60 - 100 g/m² bzw. 80 - 120 g/m². Die Ergebnisse sind in Tabelle 2 wiedergegeben.

### A-2: Grundierung für geschliffene Möbelleder

### Application:

Die Formulierung A-2 wird zweimal gut deckend eventuell "Airless" gespritzt (75 - 125 g/m²). Trocknung erfolgt wie unter Applikation A-1. Dann wird ein Zwischenlack (Nitrocellulose-Emulsion) gespritzt, dann wird getrocknet (siehe A-1) anschließend wird geprägt bei einer Temperatur von 90 Grad C, einem Druck von 250 bar für eine Dauer von 3 sec. Es wird eine Prägeplatte mit mittleren Porennarben verwendet. Es wird noch einmal mittelstark (25 - 50 g/m²) gespritzt, getrocknet und abschließend 8 Stunden gemillt.

Die Gesamtauftragsmenge beträgt 200 bis 300 g/m². Die Ergebnisse sind in Tabelle 2 wiedergegeben.

### A-3: Grundierung für Spalte

### Applikation:

Die Formulierung A-3 wird einmal mittels "Roller-coating" im Gegenlauf aufgetragen (100 - 175 g/m²). Es wird dann gebügelt bei 90 Grad C, 150 bar für 3 sec., daran schließt sich zweimaliges Roller-coating mit 75 - 100 g/m² und anschließend mit 25 - 75 g/m² an. Dann wird als Zwischenlack eine Nitrocelluulose-Emulsion aufgebracht. Dann wird geprägt bei 90 Grad C, 250 - 300 bar und 3 - 5 s.

Die Gesamtauftragsmenge beträgt 200 bis 350 g/m². Die Ergebnisse gehen aus Tabelle 2 hervor.

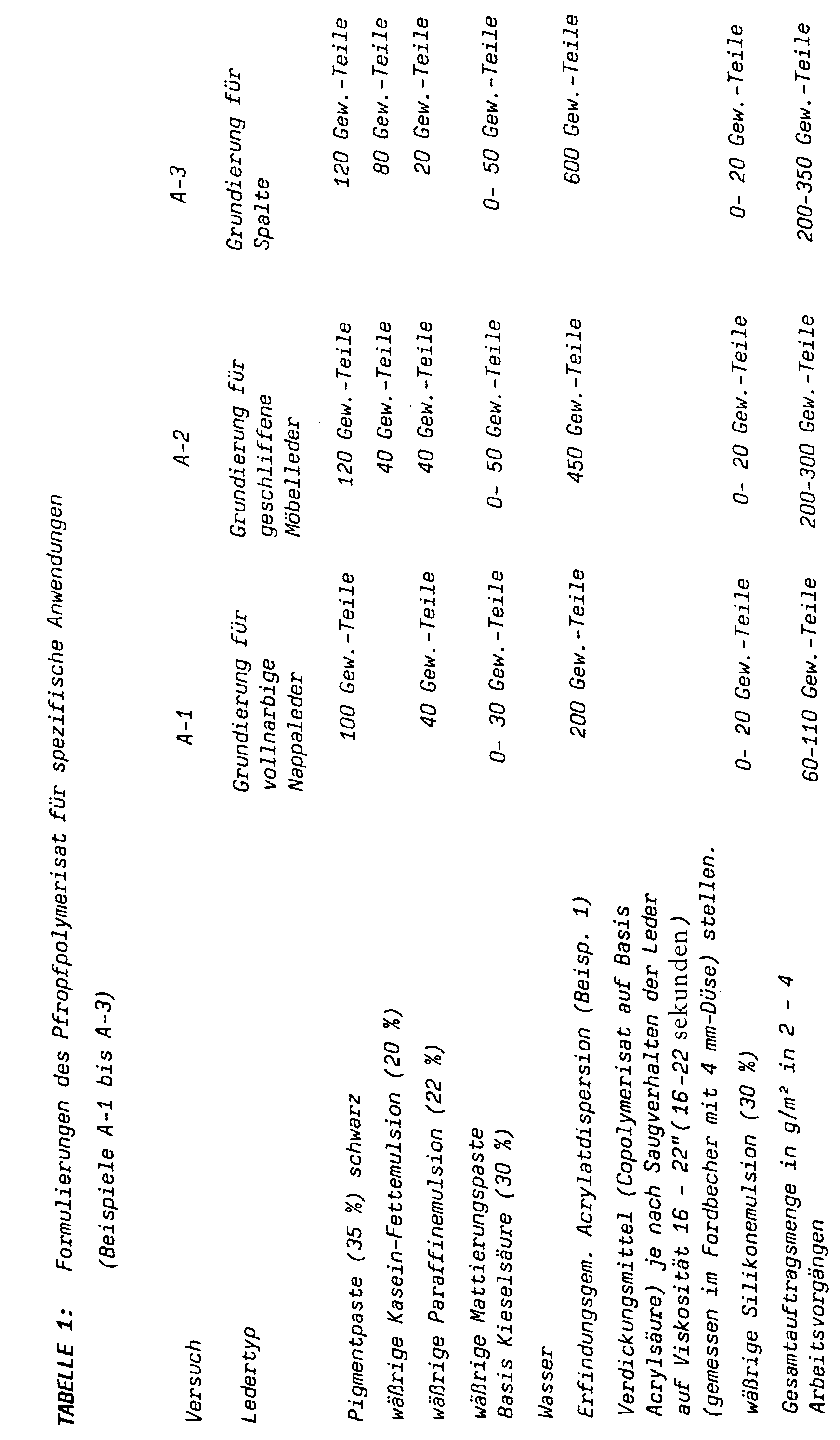

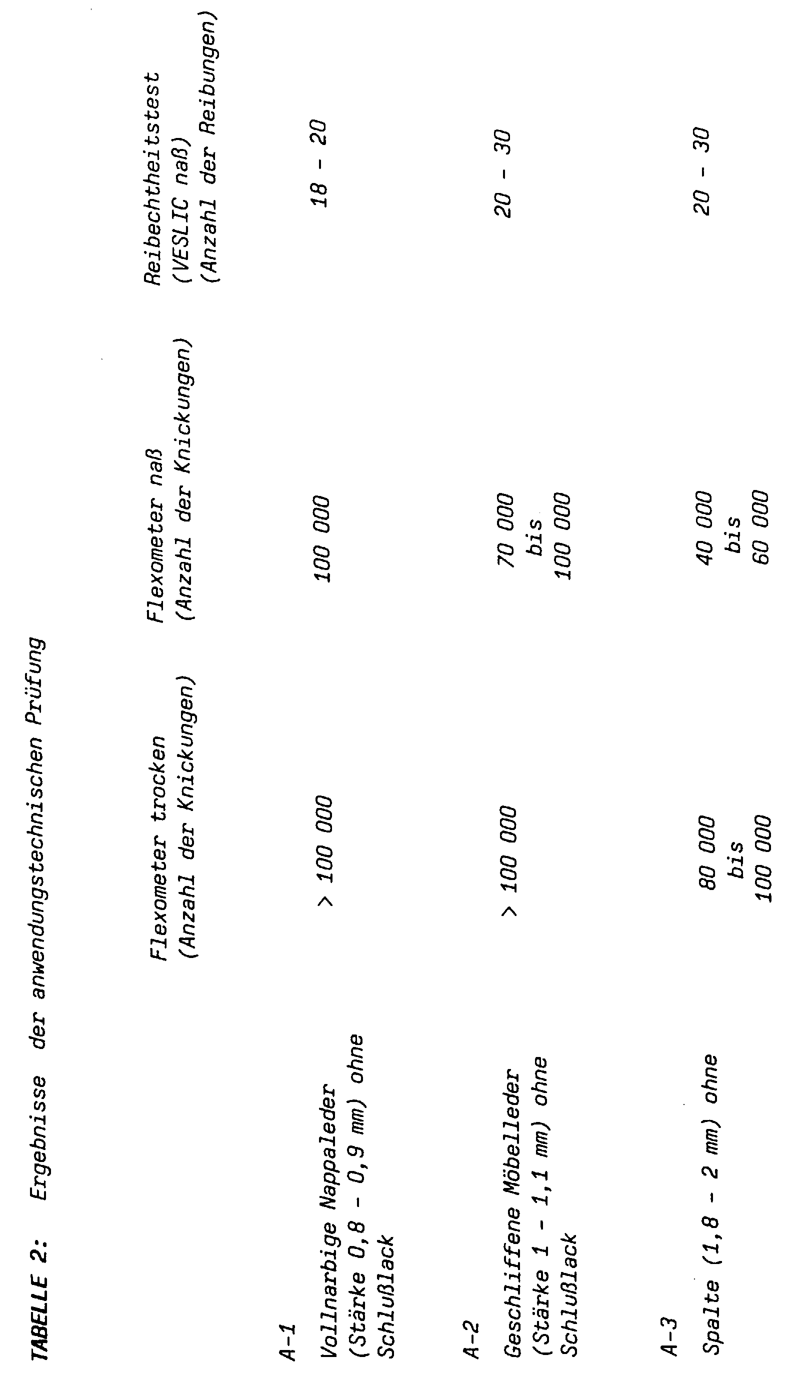

## Patentansprüche

1. Emulsionspolymerisate auf Acrylatbasis zur Behandlung flexibler Flächengebilde,
dadurch gekennzeichnet,
daß die Emulsionspolymerisate EMP Pfropfprodukte von Pfropfmonomeren der Formel I 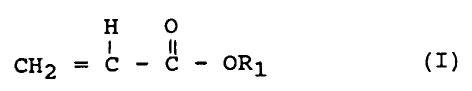 worin R₁ für einen Alkylrest mit 2 - 24 Kohlenstoffatomen steht auf ein Basispolymerisat BP darstellen, das zu 55 - 100 Gew.-% aufgebaut ist aus Monomeren der Formel II 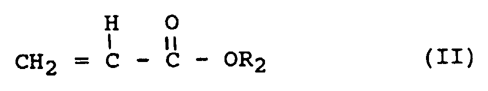 worin R₂ für einen Alkylrest mit 2 - 24 Kohlenstoffatomen steht, mit der Maßgabe, daß das Verhältnis des Basispolymerisats BP zu dem Pfropfmonomeren der Formel I 9 zu 1 bis 1 zu 1 Gew.-Teile beträgt.

2. Verfahren zur Behandlung flexibler Flächengebilde, dadurch gekennzeichnet, daß man die Emulsionspolymerisate auf Acrylatbasis gemäß Patentanspruch 1 auf die Oberfläche aufträgt.

3. Verfahren gemäß Anspruch 2, dadurch gekennzeichnet, daß man die Emulsionspolymerisate auf Acrylatbasis zur Zurichtung von Leder einsetzt.

## Claims

1. Emulsion polymers based on acrylates for treating flexible surfaces, characterised in that the emulsion polymers EMP are graft products of graft monomers of formula I 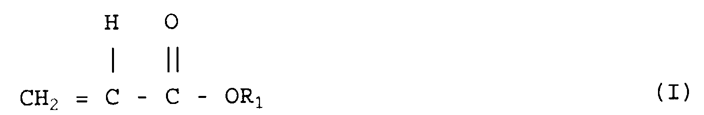 wherein R₁ is an alkyl group having 2 to 24 carbon atoms, on a base polymer BP which is synthesised, in an amount of 55 to 100 wt.%, from monomers of formula II 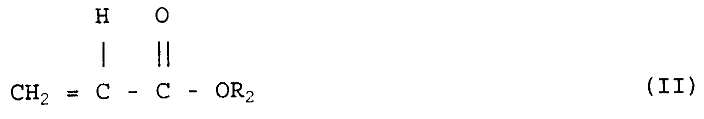 wherein R₂ is an alkyl group having 2 to 24 carbon atoms, with the proviso that the ratio of the base polymer BP to the graft monomers of formula I is 9 to 1 to 1 to 1 parts by weight.

2. A process for treating flexible surfaces, characterised in that the emulsion polymers based on acrylates according to Claim 1 are applied to the surface.

3. A process according to Claim 2, characterised in that the emulsion polymers based on acrylates are used for the finishing of leather.

## Revendications

1. Produits de polymérisation en émulsion à base d'acrylate pour le traitement d'articles souples en nappe, caractérisés en ce que les produits de polymérisation en émulsion EMP sont constitués par des produits de greffage de monomères greffants de formule I 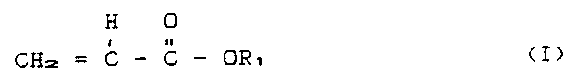 dans laquelle R₁ est mis pour un reste alkyle à 2-24 atomes de carbone, sur un polymère de base BP qui est composé, pour 55 à 100% en poids, de monomères de formule II 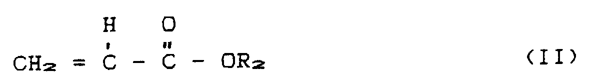 dans laquelle R₂ est mis pour un reste alkyle à 2-24 atomes de carbone, étant spécifié que le rapport du polymère de base BP au monomère greffant de formule I est compris entre 9:1 et 1:1 parties en poids.

2. Procédé de traitement d'articles souples en nappe, caractérisé en ce que l'on applique sur la surface les produits de polymérisation en émulsion à base d'acrylate selon la revendication 1.

3. Procédé selon la revendication 2, caractérisé en ce que l'on utilise les produits de polymérisation en émulsion à base d'acrylate pour le corroyage de cuir.
